# EUROPÄISCHE PATENTSCHRIFT

(11) **EP 2 648 952 B1**
(45) Veröffentlichungstag und Bekanntmachung des Hinweises auf die Patenterteilung: **23.09.2020**
(21) Anmeldenummer: 11788829.7
(22) Anmeldetag: 29.11.2011
(51) Int. Cl.: B60T 11/26, B65D 39/08

(54) **AUSGLEICHSBEHÄLTER FÜR HYDRAULISCHE KRAFTFAHRZEUGBREMSANLAGEN**
COMPENSATION TANK FOR HYDRAULIC MOTOR VEHICLE BRAKE SYSTEMS
RÉSERVOIR DE COMPENSATION POUR SYSTÈMES DE FREINAGE HYDRAULIQUES DE VÉHICULES À MOTEUR

(30) Priorität: 08.12.2010 DE 102010062619; 12.10.2011 DE 102011084308
(43) Veröffentlichungstag der Anmeldung: 16.10.2013
(73) Patentinhaber: Continental Teves AG & Co. OHG, 60488 Frankfurt am Main (DE)
(72) Erfinder: SCHIEL, Christoph, 61231 Bad Nauheim (DE); TANDLER, Peter, 61476 Kronberg/Ts. (DE); NEUMANN, Hans-Jürgen, 65428 Rüsselsheim (DE); OTTMANN, Swen, 60488 Frankfurt/M (DE); KREBS, Werner, 65582 Hambach (DE); SCHLICHT, Stephan, 64569 Nauheim (DE)
(86) Internationale Anmeldenummer: PCT/EP2011/071224
(87) Internationale Veröffentlichungsnummer: WO 2012/076359

(56) Entgegenhaltungen:
- DE-A1- 3 734 421
- US-A- 5 086 943
- US-A- 5 493 863
- US-A1- 2005 091 950

## Beschreibung

Die Erfindung betrifft einen Ausgleichsbehälter für hydraulische Kraftfahrzeugbremsanlagen, umfassend ein Behältergehäuse mit mindestens einer Druckmittelkammer, welche über einen Einfüllstutzen mit Druckmittel befüllbar ist, und ein Deckel, welcher an dem Einfüllstutzen mittels einer Gewindeverbindung mit einem Deckel- und einem Behältergewinde befestigbar ist.

Ein gattungsgemäßer Ausgleichsbehälter ist beispielsweise aus der DE 37 34 421 A1 bekannt.

Aufgrund der modernen Motorraumausgestaltung ist der Blick auf den Motor und den angrenzenden Aggregaten häufig durch Abdeckvorrichtung versperrt. Die Motorraumabdeckungen lassen im Allgemeinen nur noch gezielt einige Aussparungen für den Service offen. In diesen Freiräumen befinden sich üblicherweise die Deckel (Kappen und Verschraubungen) für Wischwasserbehälter, Motoröl und Ausgleichsbehälter, d.h. den Bremsflüssigkeitsbehälter. Da sich der erste Blick in den Motorraum zunächst an diesen Deckeln orientiert, wird hier verstärkt auf die genaue Ausrichtung der Beschriftung und Symbole der Deckel Wert gelegt.

Mit den bekannten Ausgleichsbehältern sind aufgrund vieler Toleranzen zwischen dem Behältergewinde und dem Deckelgewinde und Dichtelementen sowie möglicher feuchter bzw. trockener Dichtungen unterschiedliche Endstellungen und damit auch eine schräg gestellte Beschriftung bzw. Symbole nach dem Anziehen möglich.

Daher ist es Aufgabe der Erfindung, die aufgeführten Nachteile zu beseitigen und einen verbesserten Ausgleichsbehälter bereitzustellen.

Diese Aufgabe wird erfindungsgemäß dadurch gelöst, dass der Deckel und der Behälter jeweils einen Anschlag aufweisen, welche eine vorbestimmte Endstellung des Deckels in Bezug auf das Behältergehäuse erlauben. Hiermit wird eine einheitliche, vorbestimmte Endstellung des Deckels und damit der Beschriftung bzw. der Symbole mit dem gewünschten Anziehdrehmoment erzielt und eine falsche Endstellung kann ausgeschlossen werden.

Weitere Merkmale, Vorteile und Anwendungsmöglichkeiten der Erfindung gehen aus der nachfolgenden Beschreibung von Ausführungsbeispielen sowie anhand der Zeichnung hervor, welche Ausführungsformen zeigt. Dabei zeigt jeweils stark schematisiert:
- Figur 1: einen Ausschnitt eines erfindungsgemäßen Ausgleichsbehälters im Schnitt;
- Figur 2: eine Vorderansicht eines Behälterstutzens eines ersten Ausführungsbeispiels;
- Figur 3: einen Ausschnitt einer Seitenansicht des Behälterstutzens gemäß Fig. 2;
- Figur 4: einen Ausschnitt eines Deckels des ersten Ausführungsbeispiels im Schnitt;
- Figur 5a: eine Vorderansicht eines Behälterstutzens eines zweiten Ausführungsbeispiels eines erfindungsgemäßen Ausgleichsbehälters;
- Figur 5b: einen Schnitt des Behälterstutzens des zweiten Ausführungsbeispielsgemäß Fig. 5a;
- Figur 6a: einen Deckel eines dritten Ausführungsbeispiels eines erfindungsgemäßen Ausgleichsbehälters im Schnitt;
- Figur 6b: einen Schnitt des Deckels des zweiten Ausführungsbeispielsgemäß Fig. 6a;
- Figur 7a: einen Ausschnitt eines vierten Ausführungsbeispiels eines erfindungsgemäßen Ausgleichsbehälters und
- Figur 7b: einen Ausschnitt eines fünften Ausführungsbeispiels eines erfindungsgemäßen Ausgleichsbehälters.

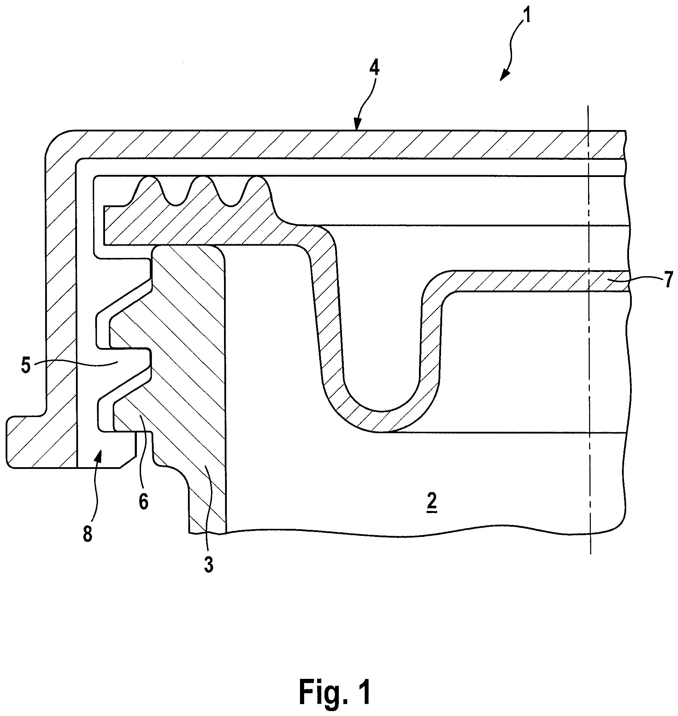

Fig. 1 zeigt einen Ausschnitt eines erfindungsgemäßen Ausgleichsbehälters 1, welcher in einem Behältergehäuse 9 mit mindestens einer Druckmittelkammer 2 beispielsweise Bremsflüssigkeit als Druckmittel für eine hydraulische Kraftfahrzeugbremsanlage bereitstellt und welcher an einem nicht dargestellten Hauptzylinder der Kraftfahrzeugbremsanlage befestigt und mit diesem verbunden ist. Das Behältergehäuse 9 weist einen Einfüllstutzen 3 auf, über welchen der Ausgleichsbehälter 1 mit Bremsflüssigkeit befüllbar ist und der mittels eines Deckels 4 verschließbar ist. Der Deckel 4 ist über eine Gewindeverbindung mit einem Deckel- und einem Behältergewinde 5,6 an dem Einfüllstutzen 3 befestigt.

Für die Funktion des Ausgleichsbehälters 1 ist es erforderlich, dass die Druckmittelkammer 2 drucklos ist. Dies bedeutet, dass ein Druckausgleich zwischen der Druckmittelkammer 2 und der Atmosphäre stattfinden können muss, damit Volumenänderungen des Druckmittels, welche beispielsweise durch Druckmittelverlust oder Temperaturänderungen des Druckmittels auftreten können, durch einen Luftaustausch ausgeglichen werden können.

Gleichzeitig ist mittels eines Dichtelementes zu verhindern, dass Druckmittel aus dem Ausgleichsbehälter 1, beispielsweise bei Schräglage des Kraftfahrzeuges, herausdringen kann.
Hierzu weist der Ausgleichsbehälter 1 als Dichtelement eine nicht näher beschriebene Membran 7 mit einem Belüftungsschlitz auf, welche nicht erfindungswesentlich ist. So sind auch andere Dichtelemente zum Abdichten und zum Druckausgleich im Rahmen der Erfindung möglich.
Ein oder mehrere Ausnehmungen 8 im Deckelgewinde 5 ermöglichen einen Luftaustausch mit der Atmosphäre. Die Ausnehmungen 8 können gemäß einer nicht dargestellten Ausführungsform auch im Behältergewinde 6 ausgebildet sein.

Den nachfolgenden Ausführungsbeispielen ist gemein, dass der Deckel 4 und das Behältergehäuse 9 jeweils einen Anschlag 10,11 aufweisen, welche eine vorbestimmte Endstellung des Deckels 4 in Bezug auf das Behältergehäuse 9 erlauben. Hiermit wird eine einheitliche, vorbestimmte und reproduzierbare Endstellung des Deckels 4 und damit der darauf angebrachten Beschriftung bzw. Symbole mit dem gewünschten Anziehdrehmoment erzielt und eine falsche Endstellung kann ausgeschlossen werden.

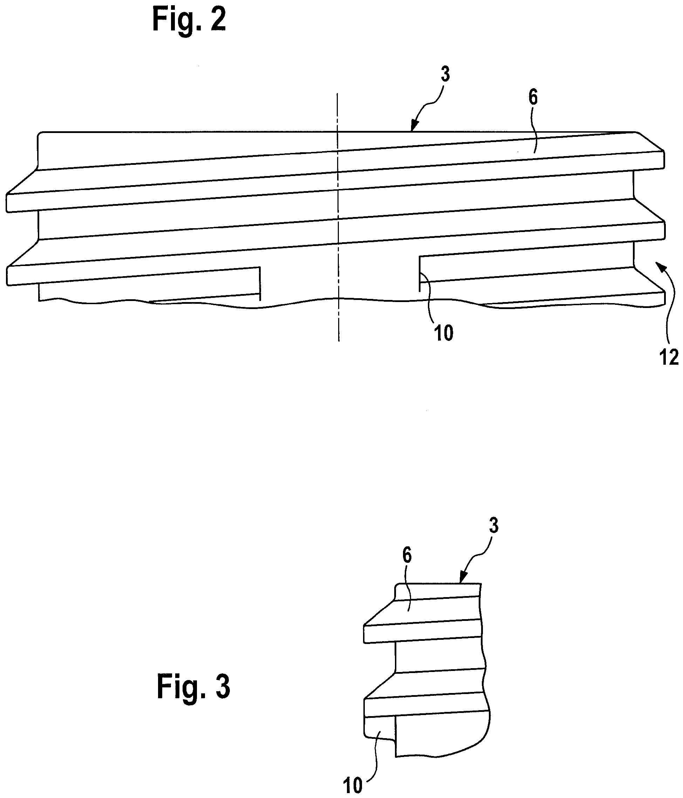

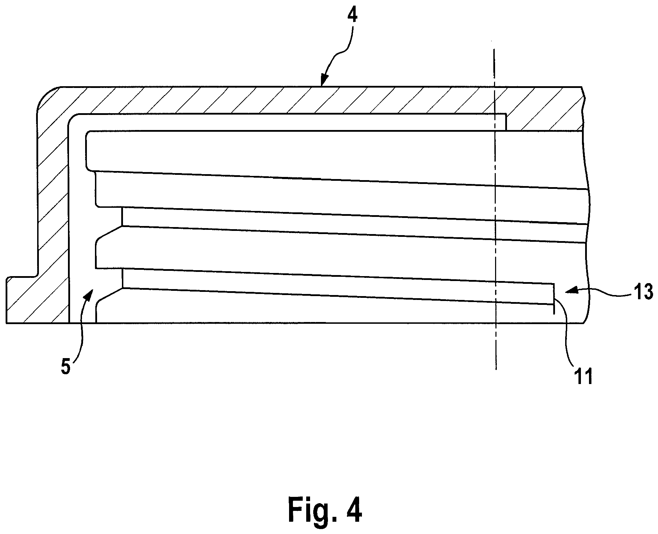

Gemäß dem in Fig. 2, 3 und 4 gezeigten ersten Ausführungsbeispiel sind die Anschläge 10,11 im Bereich des Deckel- und des Behältergewindes 5,6 angeordnet sind.

Wie den Fig. 2 und 3 zu entnehmen ist, welche eine Vorderansicht und eine Seitenansicht des Einfüllstutzens 3 zeigen, ist hierbei der Anschlag 10 des Behältergewindes 6 in einer Gewindevertiefung 12 angeordnet. Insbesondere aus Fig. 3 wird ersichtlich, dass der Anschlag 10 durch Auffüllen der Gewindevertiefung 12 mit dem Behälterwerkstoff gebildet wird.

Der korrespondierende Anschlag 11 des Deckelgewindes 5, welcher an dem Anschlag 10 des Behältergewindes 6 in der vorbestimmten Position des Deckels 4 zur Anlage kommt, wird dagegen dadurch gebildet, dass ein Gewindeanfang 13 ohne Gewindeeinlauf, mit einer stumpfen Seitenfläche ausgebildet ist.

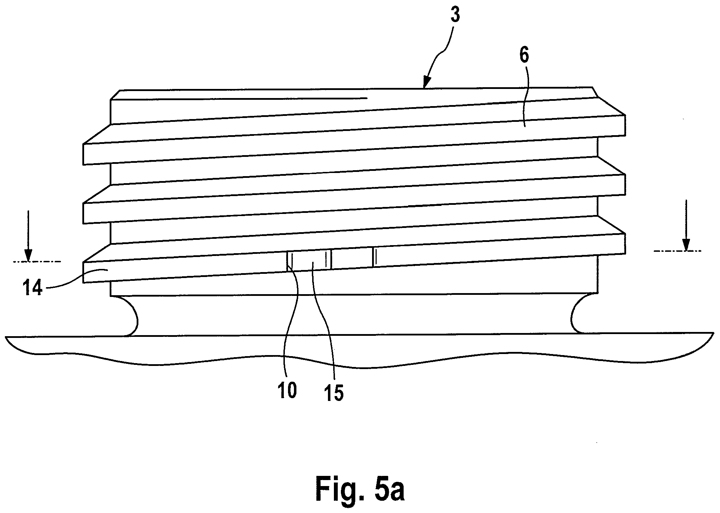

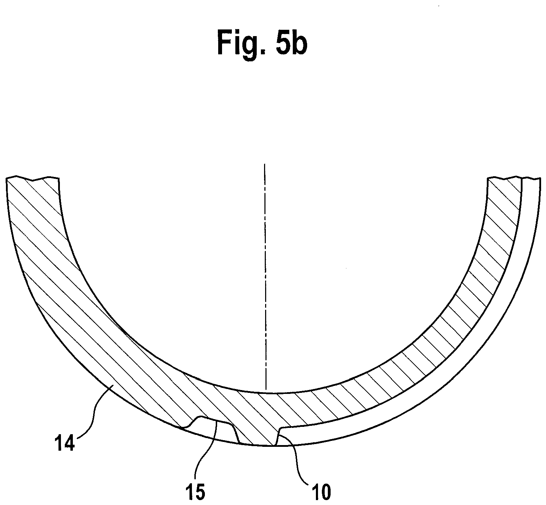

Auch das in den Fig. 5a und 5b gezeigte zweite Ausführungsbeispiel weist die Anschläge 10,11 im Bereich des Deckel- und des Behältergewindes 5,6 auf. Im Unterschied zum ersten Ausführungsbeispiel ist der Anschlag 10 des Behältergewindes 6 jedoch am Gewinde, d.h. an einem Gewindegang 14 angeordnet, an welchem der, in einer Gewindevertiefung angeordnete Anschlag 11 des nicht dargestellten Deckelgewindes 5 in der vorbestimmten Position des Deckels 4 zur Anlage kommt.

Ferner ist ersichtlich, dass der Gewindegang 14 eine Ausnehmung 15 aufweist, in welche ein nicht gezeigter, den Anschlag 11 aufweisender Vorsprung der Gewindevertiefung des Deckels 4 einschnappt. Der Anschlag 10 ist als Seitenfläche der Ausnehmung 15 ausgebildet. Hiermit kann sowie ein fühlbares als auch ein akustisches Einrasten nach Erreichen des gewünschten Anziehdrehmomentes und der gewünschten Position des Deckels 4 angezeigt werden.

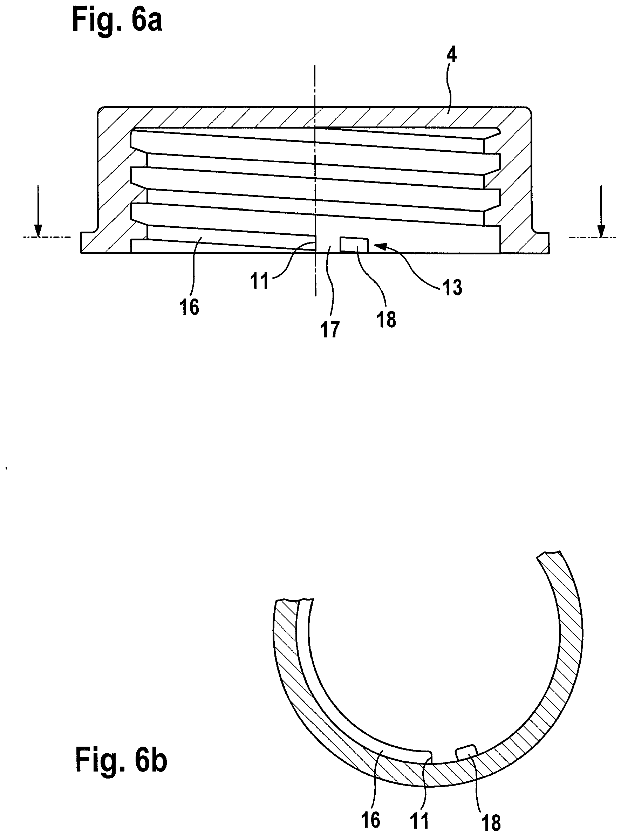

Die Fig. 6a und 6b zeigen ein dritten Ausführungsbeispiel, welches weitgehend dem ersten Ausführungsbeispiel gemäß den Fig. 2 bis 4 entspricht. Wie ersichtlich ist, weist ein vom Gewindeanfang 13 ausgehender Gewindegang 16 eine Ausnehmung 17, so dass ein Vorsprung 18 entsteht. Der Anschlag 11 ist an einer Seitenfläche der Ausnehmung 17 ausgebildet, wie in den Fig. 6a und 6b dargestellt.

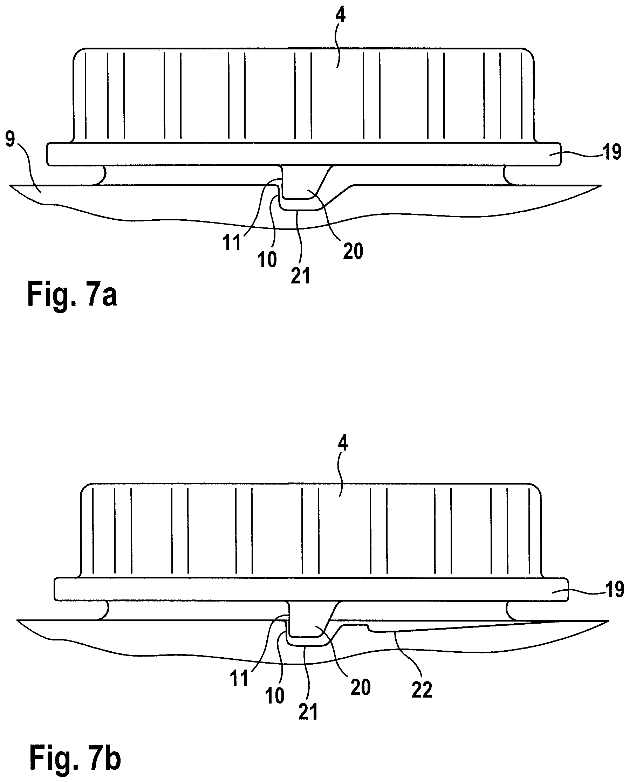

Gemäß dem vierten und dem fünften Ausführungsbeispielen, welche in den Fig. 7a und 7b gezeigt sind, können die Anschläge 10 und 11 auch an einem Deckelrand 19 bzw. einem daran angeformten Vorsprung 20 sowie an dem Behältergehäuse 9 bzw. als Seitenwand einer Ausnehmung 21 des Behältergehäuses 9 im Bereich des Einfüllstutzens 3 angeordnet sein.

Das Ausführungsbeispiel gemäß Fig. 7b weist zudem vor der Ausnehmung 21 einen Einlauf 22 auf, der ein fühlbares und akustisches Einrasten nach dem geforderten Anziehdrehmoment anzeigt.

Die beschriebenen Ausführungsbeispiele weisen den Vorteil auf, dass durch eine einfache und kostengünstige Veränderung am Behältergehäuse 9 und am Deckel 4 es auch bei einer axialen Dichtung möglich ist, eine gerichtete Beschriftung plus Symbole zu erhalten.

Hierbei sei erwähnt, dass der Anschlag 10 im Behältergewinde 6 nicht zwangsweise an einem unteren Gewindegang 14 oder in einer unteren Gewindevertiefung 12 vorgesehen sein muss. Dieser kann auch an einem oberen oder mittleren Gewindegang bzw. einer oberen oder mittleren Gewindevertiefung angeordnet sein.
Die Ausnehmung 15,17 stellt zudem eine Sicherung gegen ein ungewolltes Lösen des Deckels 4 dar.

Um die Funktion des Deckels 4 noch zu verbessern, ist die Ausnehmung 8 des Deckelgewindes 5 entgegen der Fahrtrichtung angeordnet, sodass nach der Anlage der Anschläge 10,11 von Deckel- und Behältergewinde 5,6 und dem Einklicken der Vorsprünge 18 in der Ausnehmung 15,17 bei dynamischen Veränderungen der Flüssigkeit im Besonderen während der Abbremsung im Ausgleichsbehälter 1 keine Leckage oder keinen Flüssigkeitsverlust möglich ist.

### Bezugszeichenliste

- 1: Ausgleichsbehälter
- 2: Druckmittelkammer
- 3: Einfüllstutzen
- 4: Deckel
- 5: Deckelgewinde
- 6: Behältergewinde
- 7: Membran
- 8: Ausnehmung
- 9: Behältergehäuse
- 10: Anschlag
- 11: Anschlag
- 12: Gewindevertiefung
- 13: Gewindeanfang
- 14: Gewindegang
- 15: Ausnehmung
- 16: Gewindegang
- 17: Ausnehmung
- 18: Vorsprung
- 19: Deckelrand
- 20: Vorsprung
- 21: Ausnehmung
- 22: Einlauf

## Patentansprüche

1. Ausgleichsbehälter (1) für hydraulische Kraftfahrzeugbremsanlagen, umfassend ein Behältergehäuse (9) mit mindestens einer Druckmittelkammer (2), welche über einen Einfüllstutzen (3) mit Druckmittel befüllbar ist, und ein Deckel (4), welcher an dem Einfüllstutzen (3) mittels einer Gewindeverbindung mit einem Deckel- und einem Behältergewinde (5,6) befestigbar ist, **dadurch gekennzeichnet, dass** der Deckel (4) und das Behältergehäuse (9) jeweils einen Anschlag (10,11) aufweisen, welche eine vorbestimmte Endstellung des Deckels (4) in Bezug auf das Behältergehäuse (9) erlauben, indem ein erster Anschlag in einem Gewindegang (14) angeordnet ist, ein zweiter Anschlag in einer korrespondierenden Gewindevertiefung (12) angeordnet ist, wobei die beiden Anschläge in der vorbestimmten Endstellung des Deckels (4) zur Anlage aneinander kommen.

2. Ausgleichsbehälter (1) nach Anspruch 1, **dadurch gekennzeichnet, dass** der erste Anschlag (10) in der Gewindevertiefung (12) des Behältergewindes angeordnet ist, an welchem ein Anschlag (11) des Deckelgewindes (5) in der vorbestimmten Endstellung des Deckels (4) zur Anlage kommt, wobei der Anschlag (11) des Deckelgewindes (5) dadurch gebildet wird, dass ein Gewindeanfang (13) ohne Gewindeeinlauf, mit einer stumpfen Seitenfläche ausgebildet ist.

3. Ausgleichsbehälter (1) nach Anspruch 1, **dadurch gekennzeichnet, dass** der erste Anschlag (10) an einem Gewindegang (14) des Behältergewindes (6) angeordnet ist, an welchem ein, in einer Gewindevertiefung angeordneten Anschlag (11) des Deckelgewindes (5) in der vorbestimmten Endstellung des Deckels (4) zur Anlage kommt.

4. Ausgleichsbehälter (1) nach Anspruch 2 oder 3, **dadurch gekennzeichnet, dass** der Gewindegang (14,16) eine Ausnehmung (15,17) aufweist, in welche ein Vorsprung der Gewindevertiefung einschnappt.

5. Ausgleichsbehälter (1) für hydraulische Kraftfahrzeugbremsanlagen, umfassend ein Behältergehäuse (9) mit mindestens einer Druckmittelkammer (2), welche über einen Einfüllstutzen (3) mit Druckmittel befüllbar ist, und ein Deckel (4), welcher an dem Einfüllstutzen (3) mittels einer Gewindeverbindung mit einem Deckel- und einem Behältergewinde (5,6) befestigbar ist,, **dadurch gekennzeichnet, dass** der Deckel (4) und das Behältergehäuse (9) jeweils einen Anschlag (10,11) aufweisen, welche eine vorbestimmte Endstellung des Deckels (4) in Bezug auf das Behältergehäuse (9) erlauben, indem die Anschläge (10,11) an einem Vorsprung (20) eines Deckelrandes (19) sowie in einer Ausnehmung (21) des Behältergehäuses (9) im Bereich des Einfüllstutzens (3) angeordnet sind.

6. Ausgleichsbehälter (1) nach Anspruch 5, **dadurch gekennzeichnet, dass** vor der Ausnehmung (21) ein Einlauf (22) vorgesehen ist.

## Claims

1. Compensation tank (1) for hydraulic motor vehicle brake systems, comprising a tank housing (9) having at least one pressure medium chamber (2) which can be held with pressure medium via a filler neck (3), and a cap (4) which can be fastened to the filler neck (3) by means of a threaded connection comprising a cap thread (5) and a tank thread (6), **characterized in that** the cap (4) and the tank housing (9) each have a respective stop (10, 11), which stops permit a predetermined end position of the cap (4) in relation to the tank housing (9) by a first stop being arranged in a thread turn (14), and a second stop being arranged in a corresponding thread root (12), with the two stops coming into abutment against each other in the predetermined end position of the cap (4).

2. Compensation tank (1) according to Claim 1, **characterized in that** the first stop (10) is arranged in the thread root (12) of the tank thread, against which stop (10) a stop (11) of the cap thread (5) comes into abutment in the predetermined end position of the cap (4), the stop (11) of the cap thread (5) being formed **in that** a thread start (13) is configured without a lead-in and with a blunt end face.

3. Compensation tank (1) according to Claim 1, **characterized in that** the first stop (10) is arranged on a thread turn (14) of the tank thread (6), against which stop (10) a stop (11) of the cap thread (5) arranged in a thread root comes into abutment in the predetermined end position of the cap (4).

4. Compensation tank (1) according to Claim 2 or 3, **characterized in that** the thread turn (14, 16) has a recess (15, 17) into which a projection of the thread root snaps.

5. Compensation tank (1) for hydraulic motor vehicle brake systems, comprising a tank housing (9) having at least one pressure medium chamber (2) which can be filled with pressure medium via a filler neck (3), and a cap (4) which can be fastened to the filler neck (3) by means of a threaded connection comprising a cap thread (5) and a tank thread (6), **characterized in that** the cap (4) and the tank housing (9) each have a respective stop (10, 11), which stops permit a predetermined end position of the cap (4) in relation to the tank housing (9) by the stops (10, 11) being arranged on a projection (20) of a cap edge (19) and in a recess (21) of the tank housing (9) in the region of the filler neck (3).

6. Compensation tank (1) according to Claim 5, **characterized in that** a lead-in (22) is provided ahead of the recess (21).

## Revendications

1. Réservoir de compensation (1) pour des systèmes de freinage hydrauliques de véhicules à moteur, comprenant un carter de réservoir (9) doté d'au moins une chambre à fluide sous pression (2) qui peut être remplie d'un fluide sous pression par l'intermédiaire d'un goulot de remplissage (3), et d'un bouchon (4) qui peut être fixé sur le goulot de remplissage (3) par vissage entre un filet de bouchon et un filet de réservoir (5, 6), **caractérisé en ce que** le bouchon (4) et le carter de réservoir (9) présentent chacun une butée (10, 11) qui permet une position finale prédéterminée du bouchon (4) par rapport au carter de réservoir (9) par le fait qu'une première butée est disposée sur une crête de filet (14), une deuxième butée est disposée dans une gorge de filet (12) correspondante, les deux butées venant en prise l'une contre l'autre dans la position finale prédéterminée du bouchon (4).

2. Réservoir de compensation (1) selon la revendication 1, **caractérisé en ce que** la première butée (10) est disposée dans la gorge de filet (12) du filet de réservoir où une butée (11) du filet de bouchon (5) vient en prise dans la position finale prédéterminée du bouchon (4), la butée (11) du filet de bouchon (5) étant formée **en ce qu'**un début de filet (13) sans entrée de filet est formé avec une surface latérale sans tranchant.

3. Réservoir de compensation (1) selon la revendication 1, **caractérisé en ce que** la première butée (10) est disposée sur une crête de filet (14) du filet de réservoir (6) où une butée (11) du filet de bouchon (5), disposée dans une gorge de filet, vient en prise dans la position finale prédéterminée du bouchon (4) .

4. Réservoir de compensation (1) selon la revendication 2 ou 3, **caractérisé en ce que** la crête de filet (14, 16) présente un évidement (15, 17) dans lequel vient s'enclencher une saillie de la gorge de filet.

5. Réservoir de compensation (1) pour des systèmes de freinage hydrauliques de véhicules à moteur, comprenant un carter de réservoir (9) doté d'au moins une chambre à fluide sous pression (2) qui peut être remplie d'un fluide sous pression par un goulot de remplissage (3), et d'un bouchon (4) qui peut être fixé sur le goulot de remplissage (3) par vissage entre un filet de bouchon et un filet de réservoir (5, 6),
**caractérisé en ce que** le bouchon (4) et le carter de réservoir (9) présentent respectivement une butée (10, 11) qui permet une position finale prédéterminée du bouchon (4) par rapport au carter de réservoir (9) par le fait que les butées (10, 11) sont disposées sur une saillie (20) d'un rebord de bouchon (19) ainsi que dans un évidement (21) du carter de réservoir (9) au niveau du goulot de remplissage (3).

6. Réservoir de compensation (1) selon la revendication 5, **caractérisé en ce qu'**une entrée (22) est prévue avant l'évidement (21).
